# DEMANDE DE BREVET EUROPEEN

(11) **EP 4 696 971 A1**
(43) Date de publication de la demande: **18.02.2026**
(21) Numéro de dépôt: 25185575.5
(22) Date de dépôt: 26.06.2025
(51) Int. Cl.: F28D 9/00, F28D 20/02, F28F 3/02, F28F 13/00

(54) **DISPOSITIF D'ÉCHANGE ET DE STOCKAGE D'ÉNERGIE THERMIQUE**

(30) Priorité: 19.07.2024 FR 2407983
(71) Demandeur: Nobatek, 64600 Anglet (FR)
(72) Inventeur: RAJI, Saed, 33170 GRADIGNAN (FR); AKETOUANE, Zakaria, 69410 CHAMPAGNE-AU-MONT-D'OR (FR); ROGER, Pierre, 33270 FLOIRAC (FR); VARELA, Benjamin, 33610 CESTAS (FR)
(74) Mandataire: Fantin, Laurent

(57) **Abrégé**

L'invention a pour objet un dispositif d'échange et de stockage d'énergie thermique comportant :
- plusieurs modules d'échange thermique (22) espacés entre eux,
- au moins un milieu de stockage (28), intercalé entre les modules d'échange thermique (22), comprenant au moins un matériau à changement de phase,
- au moins un système intercalaire (50) positionné entre au moins des premier et deuxième modules d'échange thermique (22, 22'), configuré pour se déformer de manière élastique et être comprimé entre les premier et deuxième modules d'échange thermique (22, 22').

Cette solution permet de maintenir les plaques des modules d'échange thermique comprimées les unes contre les autres, ce qui tend à limiter les risques de fuite.

## Description

La présente demande se rapporte à un dispositif permettant des échanges thermiques entre deux fluides (gaz ou liquide) et un stockage d'énergie thermique.

Selon un mode de réalisation visible sur les figures 1 et 2 et décrit dans le document GB 2484539, un dispositif d'échange et de stockage d'énergie thermique 10 comprend plusieurs modules d'échange thermique 12 espacés entre eux et positionnés dans une enceinte contenant un matériau à changement de phase au moins au niveau des zones intercalaires 14 entre les échangeurs thermiques 12.

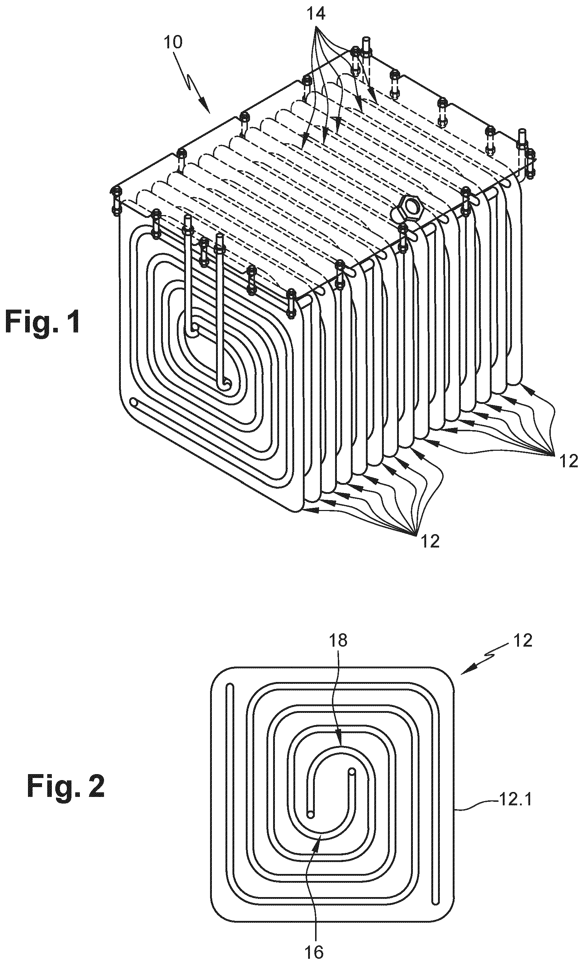

Selon une configuration visible sur la figure 2, chaque module d'échange thermique 12 comprend un corps 12.1 en un matériau conducteur thermiquement qui comporte un premier conduit 16 en spirale destiné à un premier fluide caloporteur ainsi qu'un deuxième conduit 18 en spirale destiné à un deuxième fluide caloporteur, les formes en spirale des premier et deuxième conduits 16, 18 étant imbriquées l'une dans l'autre.

Selon un mode de réalisation, chaque corps 12.1 comprend deux plaques qui présentent chacune des sillons en fonction des premier et deuxième conduits 16, 18 à réaliser et sont assemblées par soudage.

Ce mode de réalisation n'est pas pleinement satisfaisant car les risques de fuites entre les premier et deuxième conduits 16 18 sont relativement importants en fonctionnement, notamment lorsqu'un des premier et deuxième conduits 16, 18 contient un fluide gazeux sous pression.

La présente invention vise à remédier à tout ou partie des inconvénients de l'art antérieur.

A cet effet, l'invention a pour objet un dispositif d'échange et de stockage d'énergie thermique comportant plusieurs modules d'échange thermique espacés entre eux ainsi qu'au moins un milieu de stockage intercalé entre les modules d'échange thermique, chaque module d'échange thermique comprenant au moins deux plaques délimitant entre elles au moins des premier et deuxième conduits dans lesquels circulent des premier et deuxième fluides caloporteurs, le milieu de stockage comprenant au moins un matériau à changement de phase.

Selon l'invention, le dispositif d'échange et de stockage d'énergie thermique comprend au moins un système intercalaire positionné entre au moins des premier et deuxième modules d'échange thermique, configuré pour se déformer de manière élastique et être comprimé entre les premier et deuxième modules d'échange thermique.

Chaque système intercalaire exerce des efforts d'expansion qui maintiennent les plaques de chaque module d'échange thermique comprimées les unes contre les autres, ce qui tend à limiter les risques de fuite.

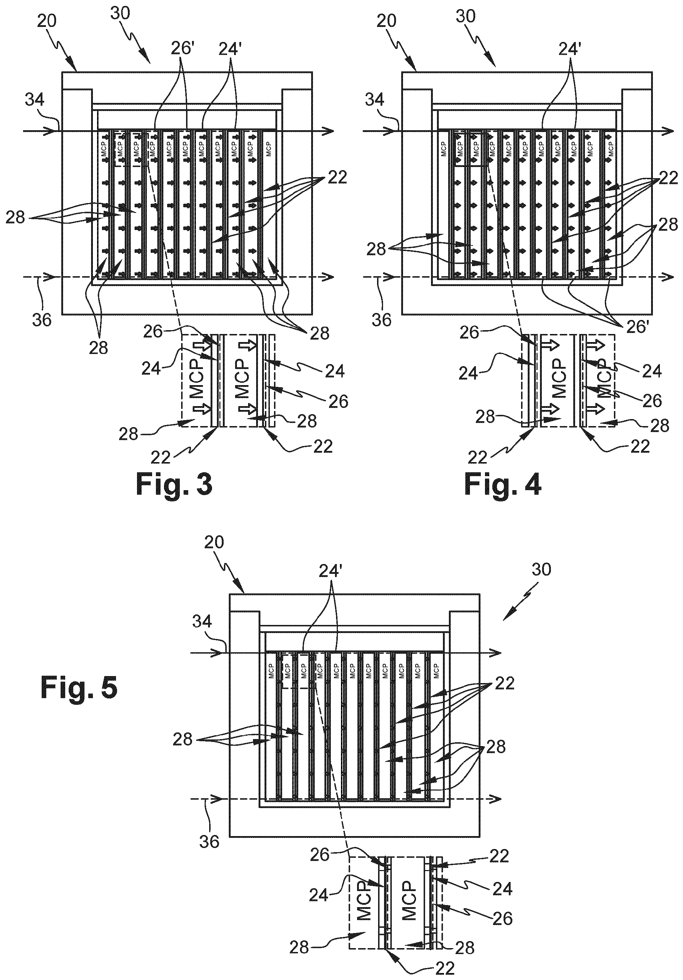

D'autres caractéristiques et avantages ressortiront de la description de l'invention qui va suivre, description donnée à titre d'exemple uniquement, en regard des dessins annexés parmi lesquels :
- La figure 1 est une vue en perspective d'un dispositif d'échange et de stockage d'énergie thermique illustrant un mode de réalisation de l'art antérieur,
- La figure 2 est une vue de face d'un module d'échange thermique du dispositif d'échange et de stockage d'énergie thermique visible sur la figure 1,
- La figure 3 est une coupe schématique d'un dispositif d'échange et de stockage d'énergie thermique illustrant un mode de réalisation de l'invention, lors d'une phase de restitution d'énergie thermique,
- La figure 4 est une coupe schématique du dispositif d'échange et de stockage d'énergie thermique visible sur la figure 3, lors d'une phase de stockage d'énergie thermique,
- La figure 5 est une coupe schématique du dispositif d'échange et de stockage d'énergie thermique visible sur la figure 3, lors d'une phase d'échange d'énergie thermique,
- La figure 6 est une vue en perspective d'un module d'échange thermique illustrant un premier mode de réalisation de l'invention,
- La figure 7 est une représentation schématique d'un module d'échange thermique illustrant un deuxième mode de réalisation de l'invention,
- La figure 8 est une vue en perspective d'une partie d'un dispositif d'échange et de stockage d'énergie thermique illustrant un mode de réalisation de l'invention,
- La figure 9 est une vue en perspective d'une partie d'un dispositif d'échange et de stockage d'énergie thermique illustrant un autre mode de réalisation de l'invention,
- La figure 10 est une vue de dessus d'une partie d'un dispositif d'échange et de stockage d'énergie thermique illustrant un autre mode de réalisation de l'invention, et
- La figure 11 est une vue de dessus d'une partie d'un dispositif d'échange et de stockage d'énergie thermique illustrant un autre mode de réalisation de l'invention.
Selon un mode de réalisation visible sur les figures 3 à 5, un dispositif d'échange et de stockage d'énergie thermique 20 comprend plusieurs modules d'échange thermique 22 espacés entre eux, comportant chacun au moins des premier et deuxième conduits 24, 26 dans lesquels circulent des premier et deuxième fluides caloporteurs, les modules d'échange thermique 22 étant en contact avec un milieu de stockage 28.

Selon une configuration, le dispositif d'échange et de stockage d'énergie thermique 20 comprend une enceinte 30 contenant plusieurs modules d'échange thermique 22 espacés entre eux ainsi qu'au moins un milieu de stockage 28 intercalé entre les modules d'échange thermique 22. Les premiers conduits 24 des différents modules d'échange thermique 22 sont reliés entre eux, en série, par des tronçons de conduit 24' et forment une portion d'un premier circuit 34 dans lequel circule le premier fluide caloporteur. Les deuxièmes conduits 26 des différents modules d'échange thermique 22 sont reliés entre eux, en série, par des tronçons de conduit 26' et forment une portion d'un deuxième circuit 36 dans lequel circule le deuxième fluide caloporteur.

Selon une application, le premier circuit 34 comprend au moins un premier échangeur thermique configuré pour capter des calories dans un premier environnement, comme l'extérieur d'un bâtiment par exemple, et les transmettre au premier fluide caloporteur. En complément, le deuxième circuit 36 comprend au moins un deuxième échangeur thermique configuré pour transférer des calories entre le deuxième fluide caloporteur et un deuxième environnement, comme l'intérieur du bâtiment par exemple.

Le milieu de stockage 28 comprend au moins un matériau à changement de phase configuré pour passer de l'état liquide à l'état solide lors d'une phase de stockage d'énergie thermique et de l'état solide à l'état liquide lors d'une phase de restitution d'énergie thermique. Selon un mode de réalisation, le matériau à changement de phase présente une température de solidification de l'ordre de 20°C. A titre d'exemple, le matériau à changement de phase peut être choisi parmi un matériau suivant : la paraffine, un acide gras, un hydrate de sel, une solution eutectique ou autres. Bien entendu, l'invention n'est pas limitée à ces matériaux à changement de phase.

Selon un premier mode de fonctionnement visible sur la figure 3 correspondant à une phase de restitution d'énergie thermique, le matériau à changement de phase du milieu de stockage 28 passe de l'état solide à l'état à liquide, ce qui produit de la chaleur latente transférée au premier ou deuxième fluide caloporteur au niveau de chaque module d'échange thermique 22.

Selon un deuxième mode de fonctionnement visible sur la figure 4 correspondant à une phase de stockage d'énergie thermique, le premier ou deuxième fluide caloporteur transfère au niveau de chaque module d'échange thermique 22 de l'énergie thermique vers le matériau à changement de phase du milieu de stockage 28 qui passe de l'état liquide à l'état solide. Dans ce cas, l'énergie thermique du premier ou deuxième fluide caloporteur est stockée sous forme d'énergie latente.

Selon un troisième mode de fonctionnement visible sur la figure 5 correspondant à une phase d'échange d'énergie thermique, l'énergie thermique est transférée entre les premier et deuxième fluides caloporteurs au niveau de chaque module d'échange thermique 22. Selon une application, le premier fluide caloporteur a une température inférieure à la température de changement de phase du matériau à changement de phase. Le deuxième fluide caloporteur a une température supérieure à la température de changement de phase du matériau à changement de phase.

Le nombre et les dimensions des modules d'échange thermique 22 du dispositif d'échange et de stockage d'énergie thermique 20 et/ou le volume et les caractéristiques du milieu de stockage 28 sont déterminés en fonction des besoins de stockage et/ou d'échange d'énergie thermique.

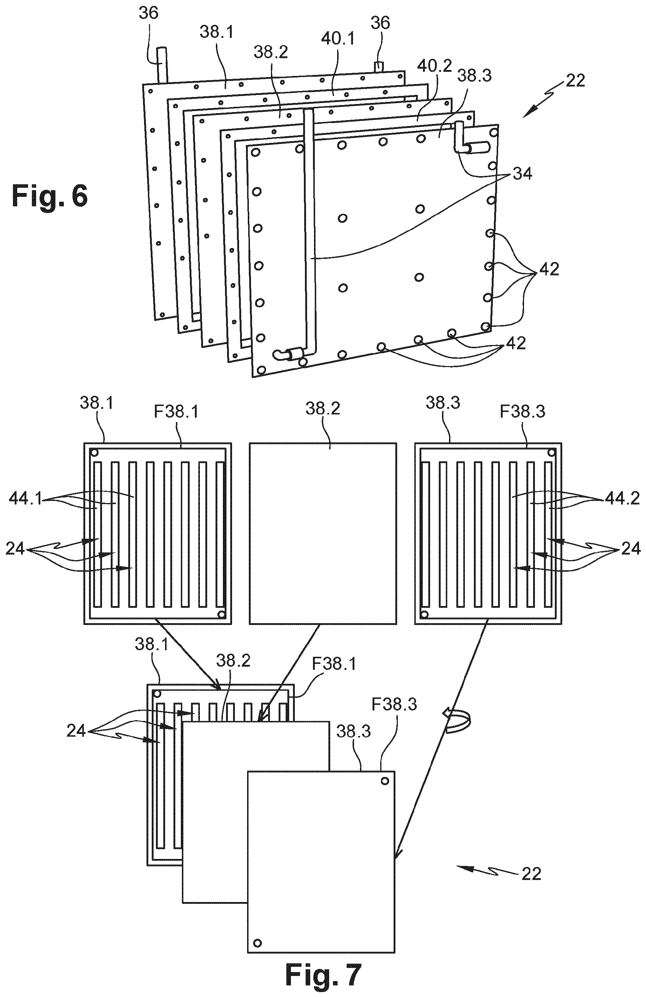

Selon une configuration visible sur les figures 6 et 7, chaque module d'échange thermique 22 présente un contour carré ou rectangulaire qui comprend des côtés dont certains sont orientés verticalement et d'autres horizontalement.

Selon un mode de réalisation visible sur la figure 6, au moins un module d'échange thermique 22 comprend des première, deuxième et troisième plaques 38.1 à 38.3 pleines de mêmes dimensions, qui présentent des faces planes, un premier joint d'étanchéité périphérique 40.1 intercalé entre les première et deuxième plaques 38.1, 38.2, un deuxième joint d'étanchéité périphérique 40.2 intercalé entre les deuxième et troisième plaques 38.2, 38.3 ainsi que des éléments de fixation 42 maintenant assemblés les première, deuxième et troisième plaques 38.1 à 38.3. Selon un agencement, les éléments de fixation 42 sont situés en périphérie et traversent les première, deuxième et troisième plaques 38.1 à 38.3 ainsi que les premier et deuxième joints périphériques 40.1, 40.2, ces derniers étant comprimés entre les plaques 38.1 à 38.3.

Selon une configuration, au moins une première cloison peut être intercalée entre les première et deuxième plaques 38.1, 38.2, encerclée par le premier joint d'étanchéité périphérique 40.1 pour délimiter le premier conduit 24. Selon une configuration, le premier joint d'étanchéité périphérique 40.1 est configuré pour assurer une étanchéité entre les première et deuxième plaques 38.1, 38.2 et délimiter le premier conduit 24. La première cloison pourrait être distincte du premierjoint d'étanchéité périphérique 40.1. Au moins une deuxième cloison peut être intercalée entre les deuxième et troisième plaques 38.2, 38.3, encerclée par le deuxième joint d'étanchéité périphérique 40.2 pour délimiter le deuxième conduit 26. Selon une configuration, le deuxième joint d'étanchéité périphérique 40.2 est configuré pour assurer une étanchéité entre les deuxième et troisième plaques 38.2, 38.3 et délimiter le deuxième conduit 26. La deuxième cloison pourrait être distincte du deuxième joint d'étanchéité périphérique 40.2.

Selon ce premier mode de réalisation, la deuxième plaque 38.2 forme une barrière totalement étanche entre les premier et deuxième conduits 24, 26.

Selon un deuxième mode de réalisation visible sur la figure 7, au moins un module d'échange thermique 22 comprend des première, deuxième et troisième plaques 38.1 à 38.3 pleines de mêmes dimensions ainsi que des éléments de fixation 42 situés en périphérie et maintenant assemblés les première, deuxième et troisième plaques 38.1 à 38.3. Selon ce deuxième mode de réalisation, la première plaque 38.1 présente une face F38.1 orientée vers la deuxième plaque 38.2, qui comprend au moins un premier sillon 44.1 délimitant le premier conduit 24 lorsque les première et deuxième plaques 38.1, 38.2 sont plaquées l'une contre l'autre. La troisième plaque 38.3 présente une face F38.3 orientée vers la deuxième plaque 38.2, qui comprend au moins un deuxième sillon 44.2 délimitant le deuxième conduit 26 lorsque les deuxième et troisième plaques 38.2, 38.3 sont plaquées l'une contre l'autre. Les premier et deuxième sillons 44.1, 44.2 peuvent être obtenus par des techniques de retrait de matière.

Selon ce deuxième mode de réalisation, le premier conduit 24 est positionné entre les première et deuxième plaques 38.1, 38.2 et le deuxième conduit 26 est positionné entre les deuxième et troisième plaques 38.2, 38.3. Ainsi, la deuxième plaque 38.2 forme une barrière totalement étanche entre les premier et deuxième conduits 24, 26.

Dans ces deux modes de réalisation, les première, deuxième et troisième plaques sont en un matériau conducteur thermiquement, comme en alliage d'aluminium par exemple.

Pour donner un ordre de grandeur, chacune des première, deuxième et troisième plaques 38.1, 38.2, 38.3 est mince et présente une épaisseur comprise entre 0,1 et 4 mm. Chacun des premier et deuxième joints d'étanchéité périphériques 40.1, 40.2 prévus selon le premier mode de réalisation présente une épaisseur comprise entre 0,5 et 2 mm.

Bien entendu, l'invention n'est pas limitée à ces modes de réalisation pour le module d'échange thermique 22. Ainsi, au moins un module d'échange thermique 22 comprend des première et deuxième plaques qui présentent respectivement des première et deuxième faces de contact se faisant face, des cloisons intercalées entre les première et deuxième faces de contact et délimitant les premier et deuxième conduits ainsi que des éléments de fixation pour maintenir les première et deuxième plaques et les cloisons assemblées.

En variante, chacune des première et deuxième faces de contact comprend un premier sillon pour le premier conduit ainsi qu'un deuxième sillon pour le deuxième conduit, les premiers sillons formant le premier conduit lorsque les première et deuxième plaques sont plaquées l'une contre l'autre, les deuxièmes sillons formant le deuxième conduit lorsque les première et deuxième plaques sont plaquées l'une contre l'autre.

Le module d'échange thermique 22 pourrait être identique à ceux décrits dans le document GB 2484539.

Le dispositif d'échange et de stockage d'énergie thermique 20 comprend des éléments de liaison 46 reliant les différents modules d'échange thermique 22. Le dispositif d'échange et de stockage d'énergie thermique 20 peut comprendre des entretoises pour maintenir espacés les modules d'échange thermique 22.

Les éléments de liaison 46 peuvent être distincts des éléments de fixation 42 des modules d'échange thermique 22. En variante, les éléments de liaison 46 peuvent être confondus avec les éléments de fixation 42.

Pour donner un ordre de grandeur, les modules d'échange thermique 22 sont espacés entre eux d'une distance comprise entre 5 et 50 mm. Cet espacement est ajusté selon l'application et les besoins en termes de puissance et d'énergie.

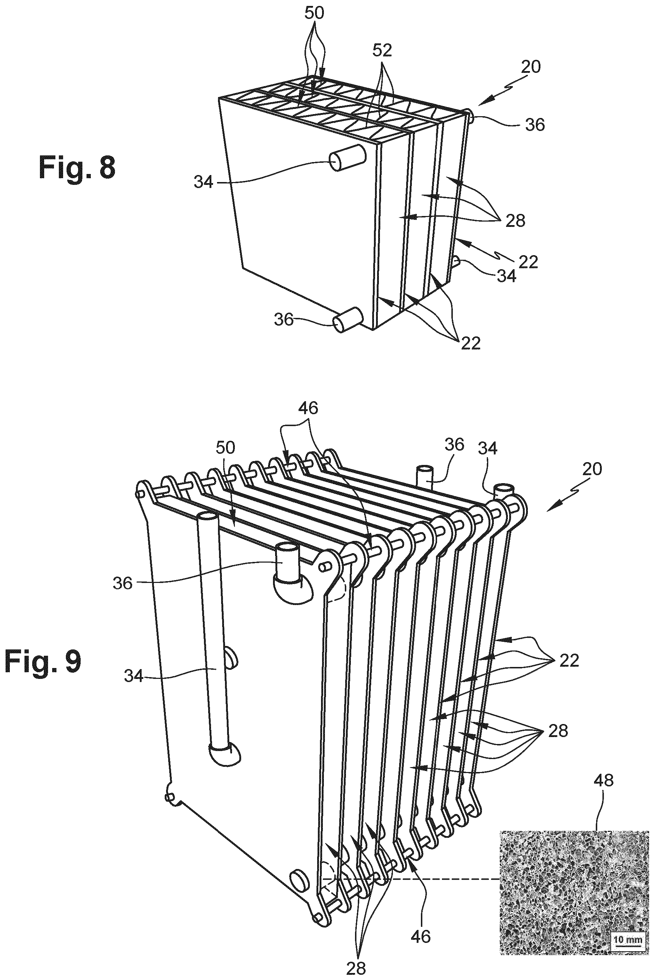

Selon un mode de réalisation visible sur la figure 9, le milieu de stockage 28 comprend au moins une mousse expansée 48, imprégnée du matériau à changement de phase. Cette mousse expansée 48 favorise les échanges thermiques entre les modules d'échange thermique 22 et entre chaque module d'échange thermique 22 et le milieu de stockage 28. Selon une configuration, le milieu de stockage 28 est une mousse expansée en graphite à faible densité.

Selon une particularité, le dispositif d'échange et de stockage d'énergie thermique 20 comprend au moins un système intercalaire 50 positionné entre au moins deux modules d'échange thermique 22, configuré pour se déformer de manière élastique et être comprimé entre les deux modules d'échange thermique 22.

Selon une configuration, le dispositif d'échange et de stockage d'énergie thermique 20 comprend au moins un système intercalaire 50 positionné dans chaque zone intercalaire. Les éléments de liaison 46 reliant les différents modules d'échange thermique 22 sont configurés pour comprimer chaque système intercalaire 50 en fonctionnement.

Ces systèmes intercalaires 50 exercent des efforts d'expansion qui maintiennent les plaques de chaque module d'échange thermique 22 comprimées les unes contre les autres, ce qui tend à limiter les risques de fuite.

Selon une configuration, la mousse expansée utilisée pour stocker le matériau à changement de phase assure au moins partiellement la fonction des systèmes intercalaires 50 et exerce des efforts d'expansion qui tendent à comprimer les plaques de chaque module d'échange thermique 22 les unes contre les autres.

Selon un autre mode de réalisation visible sur la figure 8, au moins un système intercalaire 50 comprend un profil ondulé 52 qui présente une section sensiblement constante selon une première direction et des ondulations régulièrement réparties selon une deuxième direction perpendiculaire à la première direction. Selon un agencement, la première direction est sensiblement verticale et la deuxième direction est sensiblement horizontale. Selon une configuration, le profil ondulé 52 s'étend selon une première dimension (hauteur) selon la première direction sensiblement égale à celle des modules d'échange thermique 22 selon cette même première direction ainsi qu'une deuxième dimension (largeur) selon la deuxième direction sensiblement égale à celle des modules d'échange thermique 22 selon cette même deuxième direction.

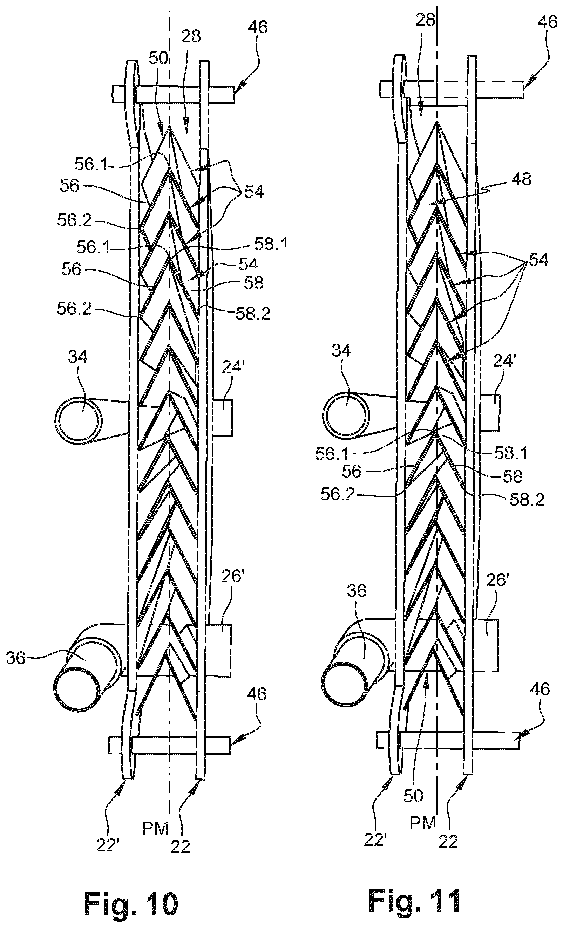

Selon d'autres modes de réalisation visibles sur les figures 10 et 11, au moins un système intercalaire 50 comprend une multitude de profilés en V 54 qui s'étendent chacun selon une première direction et qui sont espacés entre eux selon une deuxième direction perpendiculaire à la première direction. Selon un agencement, la première direction est sensiblement verticale et la deuxième direction est sensiblement horizontale. Pour un même système intercalaire 50, les profilés en V 54 sont espacés d'un pas qui peut être constant ou varié selon la deuxième direction.

Selon une configuration, tous les profilés en V 54 d'un même système intercalaire 50 sont identiques. Chaque profilé en V 54 comprend deux ailes 56, 58 reliées au niveau d'une arête commune 56.1, 58.1 et qui comprennent respectivement des première et deuxième arêtes libres 56.2, 58.2 sensiblement parallèles entre elles et à l'arête commune 56.1, 58.1.

Les arêtes communes 56.1, 58.1 des différents profilés en V 54 d'un même système intercalaire 50 sont positionnées dans un même plan médian PM situé à équidistance des modules d'échange thermique 22, 22' séparés par le système intercalaire 50. En complément, les première et deuxième ailes 56, 58 sont sensiblement symétriques par rapport au plan médian PM.

En fonctionnement les premières arêtes libres 56.2 des différents profilés en V 54 sont en contact avec un premier module d'échange thermique 22 alors que leurs deuxièmes arêtes libres 58.2 sont en contact avec un deuxième module d'échange thermique 22'.

Selon un agencement visible sur la figure 10, les différents profilés en V 54 d'un système intercalaire 50 sont reliés entre eux par des éléments de liaison afin de rester immobiles les uns par rapport aux autres et former un ensemble monobloc.

Selon un autre agencement visible sur la figure 11, le système intercalaire 50 comprend une mousse expansée 48 qui assure une fonction de support mécanique reliant les différents profilés en V 54 de manière à former un ensemble monobloc.

Bien entendu, l'invention n'est pas limitée à une section en V. Les profilés d'un système intercalaire 50 pourraient comprendre chacun au moins des première et deuxième ailes 56, 58 reliées par une zone de jonction déformable de manière élastique, comme une section en W, en U ou autres, respectivement en contact avec des premier et deuxième modules d'échange thermique 22, 22' séparés par le système intercalaire 50 et comprimées entre ces derniers en fonctionnement.

## Revendications

1. Dispositif d'échange et de stockage d'énergie thermique (20) comportant plusieurs modules d'échange thermique (22) espacés entre eux ainsi qu'au moins un milieu de stockage (28) intercalé entre les modules d'échange thermique (22), chaque module d'échange thermique (22) comprenant au moins deux plaques (38.1, 38.2, 38.3) délimitant entre elles au moins des premier et deuxième conduits (24, 26) dans lesquels circulent des premier et deuxième fluides caloporteurs, le milieu de stockage (28) comprenant au moins un matériau à changement de phase, **caractérisé en ce que** le dispositif d'échange et de stockage d'énergie thermique (20) comprend au moins un système intercalaire (50) positionné entre au moins des premier et deuxième modules d'échange thermique (22, 22'), configuré pour se déformer de manière élastique et être comprimé entre les premier et deuxième modules d'échange thermique (22, 22').

2. Dispositif d'échange et de stockage d'énergie thermique (20) selon la revendication 1, **caractérisé en ce que** le système intercalaire (50) comprend une multitude de profilés (54) qui s'étendent chacun selon une première direction et qui sont espacés entre eux selon une deuxième direction perpendiculaire à la première direction, chaque profilé (54) comportant au moins des première et deuxième ailes (56, 58) reliées par une zone de jonction déformable de manière élastique, respectivement en contact avec les premier et deuxième modules d'échange thermique (22, 22') et comprimées entre ces derniers en fonctionnement.

3. Dispositif d'échange et de stockage d'énergie thermique (20) selon la revendication précédente, **caractérisé en ce que** les profilés (54) présentent une section transversale en V.

4. Dispositif d'échange et de stockage d'énergie thermique (20) selon l'une des revendications précédentes, **caractérisé en ce qu'**il comprend des éléments de liaison (46) reliant les différents modules d'échange thermique (22), configurés pour comprimer chaque système intercalaire 50 en fonctionnement.

5. Dispositif d'échange et de stockage d'énergie thermique (20) selon l'une des revendications précédentes, **caractérisé en ce que** le milieu de stockage (28) comprend au moins une mousse expansée (48) imprégnée du matériau à changement de phase.

6. Dispositif d'échange et de stockage d'énergie thermique selon la revendication précédente, **caractérisé en ce que** la mousse expansée est une mousse expansée en graphite à faible densité.

7. Dispositif d'échange et de stockage thermique selon l'une des revendications précédentes, **caractérisé en ce que** le système intercalaire (50) comprend une mousse expansée (48) reliant les différents profilés (54) du système intercalaire (50) de manière à former un ensemble monobloc.

8. Dispositif d'échange et de stockage thermique selon l'une des revendications précédentes, **caractérisé en ce qu'**au moins un module d'échange thermique (22) comprend des première, deuxième et troisième plaques (38.1 à 38.3) pleines, de mêmes dimensions et maintenues assemblées par des éléments de fixation (42), le premier conduit (24) étant positionné entre les première et deuxième plaques (38.1, 38.2), le deuxième conduit (26) étant positionné entre les deuxième et troisième plaques (38.2, 38.3).

9. Dispositif d'échange et de stockage thermique selon la revendication précédente, **caractérisé en ce que** le module d'échange thermique (22) comprend un premier joint d'étanchéité périphérique (40.1) intercalé entre les première et deuxième plaques (38.1, 38.2) ainsi qu'un deuxième joint d'étanchéité périphérique (40.2) intercalé entre les deuxième et troisième plaques (38.2, 38.3).

10. Dispositif d'échange et de stockage thermique selon la revendication 8, **caractérisé en ce que** la première plaque (38.1) présente une face (F38.1) orientée vers la deuxième plaque (38.2), qui comprend au moins un premier sillon (44.1) délimitant le premier conduit (24) lorsque les première et deuxième plaques (38.1, 38.2) sont plaquées l'une contre l'autre et **en ce que** la troisième plaque (38.3) présente une face (F38.3) orientée vers la deuxième plaque (38.2), qui comprend au moins un deuxième sillon (44.2) délimitant le deuxième conduit (26) lorsque les deuxième et troisième plaques (38.2, 38.3) sont plaquées l'une contre l'autre.

11. Dispositif d'échange et de stockage thermique selon l'une des revendications 1 à 7, **caractérisé en ce qu'**au moins un module d'échange thermique (22) comprend des première et deuxième plaques qui présentent respectivement des première et deuxième faces de contact se faisant face, des cloisons intercalées entre les première et deuxième faces de contact et délimitant les premier et deuxième conduits ainsi que des éléments de fixation pour maintenir les première et deuxième plaques et les cloisons assemblées.
